# EUROPÄISCHE PATENTSCHRIFT

(11) **EP 0 264 681 B1**
(45) Veröffentlichungstag und Bekanntmachung des Hinweises auf die Patenterteilung: **17.03.1993**
(21) Anmeldenummer: 87114356.6
(22) Anmeldetag: 01.10.1987
(51) Int. Cl.: G07C 5/12, G01D 15/32

(54) **Anordnung zum selbsttätigen, zeitrichtigen Positionieren einer Diagrammscheibe**
Automatic and accurately timed positioning device for a diagram disc
Dispositif pour le positionnement automatique et temporel précis d'un disque à diagramme

(30) Priorität: 11.10.1986 DE 3634796
(43) Veröffentlichungstag der Anmeldung: 27.04.1988
(73) Patentinhaber: Mannesmann Kienzle GmbH (HR B1220), 78052 Villingen-Schwenningen (DE)
(72) Erfinder: Helmschrott, Norbert, D-7730 Villingen-Schwenningen (DE); Säger, Benjamin, D-7730 Villingen-Schwenningen (DE); Jauch, Günter, D-7730 Villingen-Schwenningen (DE); Kirner, Herbert, D-7730 Villingen-Schwenningen (DE)

(56) Entgegenhaltungen:
- DE-A- 2 150 524
- DE-B- 2 416 392
- DE-C- 1 266 036
- US-A- 4 560 995
- US-A- 4 598 298

## Beschreibung

Die Erfindung betrifft eine Anordnung zum selbsttätigen, zeitrichtigen Positionieren einer Diagrammscheibe relativ zu den auf die Diagrammscheibe einwirkenden Registrierorganen in einem Registriergerät, in welchem die durch einen Schlitz eingegebene und mit einer Zentrieröffnung versehene Diagrammscheibe von Zentrier- und Mitnahmemitteln aufgenommen und von einem Laufwerk zeitsynchron angetrieben wird.

Bekanntlich stellt die Diagrammscheibe dann, wenn die Sofortinformation im Vordergrund steht und ein rascher Überblick gefordert wird, einen idealen Aufzeichnungsträger dar, der darüber hinaus leicht lesbar, aber auch bezüglich Transport und Archivierung gut handhabbar ist. Vorteilhaft einsetzbar sind Diagrammscheiben vor allem dann, wenn Aufzeichnungen innerhalb eines bestimmten Zeitabschnittes bzw. für einen zeitlich begrenzten Vorgang erfolgen sollen, personenbezogen sind und unter Umständen an verschiedenen Orten vorzunehmen sind.

Eine solche Registrieraufgabe stellt sich beispielsweise in einem Fuhrpark eines Transportunternehmens, wo die Diagrammscheibe als ein Fahrerplatz- und Fahrzeugwechsel ermöglichender Aufzeichnungsträger dient, auf dem die interessierenden Daten uhrzeitrichtig aufgezeichnet werden und von Fahrpersonal und Kontrollorganen ohne technische Hilfsmittel gelesen werden können.

Die Ursache dafür, daß Diagrammscheiben bei einer Vielzahl von Anwendungen nicht als aktueller Aufzeichnungsträger akzeptiert werden, ist nicht etwa der begrenzte Registrierhorizont oder die eingeschränkte Auflösbarkeit, sondern das im allgemeinen umständliche Wechseln der Diagrammscheiben im Registriergerät.

Bei bekannten Registriergeräten ist es beispielsweise erforderlich, eine Klappe oder einen Deckel zu öffnen, die die beschriebene Diagrammscheibe festhaltenden Spannmittel zu lösen, die Diagrammscheibe dem Gerät zu entnehmen, die neue unbeschriebene Diagrammscheibe auf den Zentrier- und Mitnahmedorn aufzufädeln, die Festhalte- und Spannmittel erneut zu betätigen und den Deckel wieder zu schließen. Bei einer solchen Einlegeprozedur besteht verständlicherweise die Gefahr, daß sie fehlerhaft ausgeführt wird, daß bei unsachgemäßer Handhabung die Diagrammscheiben bzw. deren kratzempfindliche Registrierschicht beschädigt wird und daß, da beim Öffnen und Schließen des Deckels ein Zugang zu den Registrierorganen gegeben ist, diese absichtlich oder unabsichtlich beschädigt oder dejustiert werden können.

Es liegt daher nahe, ein Registriergerät zu fordern, in welches die Diagrammscheiben durch einen Schlitz eingegeben werden können, das dementsprechend relativ flach ausgebildet ist, also wenig Raum in Anspruch nimmt und somit modernen Vorstellungen bezüglich Einbaufähigkeit in Armaturen- und Instrumententafeln oder als universell verwendbares Registriermodul entspricht. Solche Anwendungsvorstellungen bedingen ferner eine für die Großserie geeignete Bauweise, hohe Funktionssicherheit und möglichst einfache Bedienbarkeit.

Ein mit der DE-C-12 66 036 bekannt gewordenes Registriergerät, welches mit einer Einrichtung zur selbsttätigen, zeitrichtigen Ausrichtung der Diagrammauflage mit der Diagrammscheibe ausgerüstet werden kann, erfüllt zwar die Bedingung, die Diagrammscheiben durch einen Schlitz eingeben zu können, es muß bei diesem Gerät jedoch das Zentrieren und, wenn die verwendeten Diagrammscheiben, was insbesondere bei visueller Auswertung der Aufzeichnungen erforderlich ist, mit Zeitskalen versehen sind oder lediglich eine einem bestimmten Zeitpunkt zugeordnete Markierung tragen, das dann erforderliche zeitrichtige Positionieren einer eingegebenen Diagrammscheibe, d. h. das Ausrichten der Diagrammscheibe derart, daß der beispielsweise der aktuellen Uhrzeit entsprechende Skalenwert sich mit der Linie, auf der die Registrierorgane wirksam sind, deckt, von Hand mittels einer von außen betätigbaren, relativ aufwendigen Vorrichtung vorgenommen werden. Diese Maßnahme ist umständlich, sie erfordert Zeitaufwand, und es besteht eher die Gefahr, daß sie vergessen wird als bei den zuvor beschriebenen Gerätetypen.

Werden demgegenüber Diagrammscheiben verwendet, die keine Zeitzuordnung tragen, eine Zeitskale beispielsweise während des Registrierens mitgeschrieben wird, ist ein zeitrichtiges Positionieren selbstverständlich nicht möglich und auch nicht erforderlich. Andererseits ist ein zeitrichtiges Positionieren der Diagrammscheiben dann unumgänglich, wenn Diagrammscheiben zu Kontrollzwecken dem Registriergerät entnommen und wieder eingegeben werden und die Aufzeichnungen nachfolgend mit hoher Genaugikeit zeitsynchron weitergeführt werden sollen.

Der Erfindung war daher die Aufgabe gestellt, für ein Registriergerät, bei welchem die als Aufzeichnungsträger verwendeten und mit einer Zeitzuordnung versehenen Diagrammscheiben durch einen Schlitz eingegeben und entnommen werden, das Handhaben der Diagrammscheiben zu vereinfachen, insbesondere eine Anordnung zu schaffen, mit der das zeitrichtige Positionieren der Diagrammscheiben selbsttätig, also unabhängig von der subjektiven Sorgfalt des Bedienenden erfolgen kann.

Die Lösung dieser Aufgabe ist gekennzeichnet durch eine Schalteinrichtung, welche spätestens dann, wenn die Diagrammscheibe von den relativ zur Diagrammscheibe bewegbaren Zentrierund Mitnahmemitteln aufgenommen ist, den Antrieb der Diagrammscheibe von einer Registrierdrehzahl auf eine höhere Positionierdrehzahl umschaltet, eine Abtasteinrichtung, welche ein von einer der Diagrammscheibe zugeordneten Markierung erzeutes Signal liefert, und eine Steuereinrichtung, welche, ausgelöst durch das Signal der Abtasteinrichtung, die höhere Drehzahl auf die Registrierdrehzahl dann umschaltet, wenn der von der Markierung (8) auf der Diagrammscheibe (7) ausgehend von der Position der Abtastvorrichtung (21) zurückgelegte Winkelweg einer Registrierzeit entspricht, welche mit dem aktuellen Inhalt eines den zeitlichen Registrierumfang der Diagrammscheibe begrenzenden Zeitzählers übereinstimmt.

Ein bevorzugtes Ausführungsbeispiel sieht vor, daß die Steuereinrichtung einen Impulsgeber, welcher mit dem Antrieb der Diagrammscheibe in getrieblicher Verbindung steht und Impulse entsprechend dem zeitlichen Registrierumfang der Diagrammscheibe liefert, einen Impulszähler, welcher durch das von der Abtasteinrichtung gelieferte Signal nullstellbar ist und fortlaufend die vom Impulsgeber gelieferten Impulse addiert und eine Vergleichsschaltung umfaßt, welche dann ein Signal zum Umschalten des Antriebes der Diagrammscheibe auf die Registrierdrehzahl liefert, wenn die Differenz der Inhalte von Zeitzähler und Impulszähler Null ist und daß für den Registrierantrieb der Diagrammscheibe ein von einem Zeittaktgeber gesteuerter Schrittmotor vorgesehen ist, daß dem Positionierantrieb der Diagrammscheibe ein Gleichstrommotor dient und daß die Zentrier- und Mitnahmemittel über ein Summiergetriebe getrieblich sowohl mit dem Schritt-als auch mit dem Gleichstrommotor in Wirkverbindung stehen.

Die gefundene Lösung garantiert mit einem relativ geringen Aufwand, weil in einem derartigen Registriergerät vorhandene Mittel mitbenutzt werden können, ein exaktes Auffinden der Registrierposition auch bei mehrmaligem Ein- und Ausgeben ein und derselben Diagrammscheibe und evtl. Aufweitung von deren Aufnahmeöffnung. Mit der Verwendung eines zusätzlichen Gleichstrommotors ist die Positionierzeit im Bereich weniger Sekunden wählbar.

Im folgenden sei das bevorzugte Ausführungsbeispiel der Erfindung anhand der beigefügten Zeichnungen näher erläutert.

Es zeigen
FIG. 1 eine Frontansicht eines Registriergerätes der beschriebenen Gerätegattung,
FIG. 2 ein Blockdiagramm der erfindungsgemäßen Anordnung,
FIG. 3 einen Getriebeplan des die Diagrammscheibe antreibenden Laufwerkes,
FIG. 4 ein Flußdiagramm des selbsttätigen Positionierablaufs einer Diagrammscheibe.

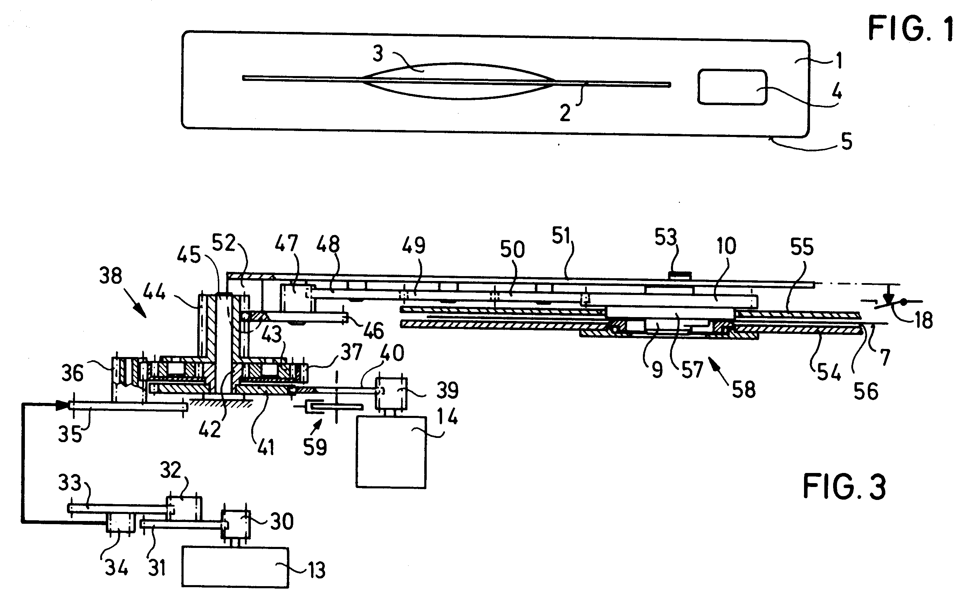

Die Frontseite des in FIG. 1 dargestellten Registriergerätes, in welchem die erfindungsgemäße Diagrammscheibenpositionieranordnung vorgesehen ist, wird von einer Frontplatte 1 gebildet, in welcher ein Schlitz 2 und eine diesem zugeordnete Griffmulde 3 für das Eingeben und Entnehmen von Diagrammscheiben ausgebildet sind. Mit einer vorzugsweise als Leuchttaste ausgebildeten Taste 4 ist das Ausgeben einer beschriebenen Diagrammscheibe steuerbar. Der Taste 4 kann ein eine mit dem Schlitz 2 zusammenwirkende Verriegelung steuerndes Schloß zugeordnet sein, so daß das Registriergerät, dessen Gehäuse mit 5 bezeichnet ist, lediglich von einem hierzu befugten Personenkreis bedienbar ist.

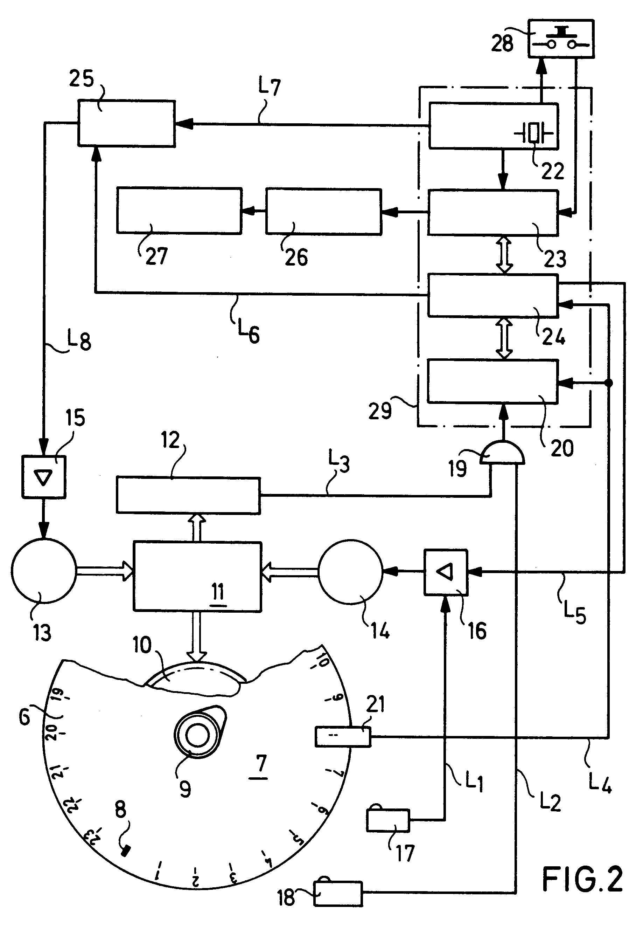

Das Blockdiagramm FIG. 2 zeigt eine mit einer Zeitskale 6 versehene Diagrammscheibe 7, die innerhalb der Zeitskale 6 eine Markierung, in diesem Falle eine O Uhr kennzeichnende Markierung 8 aufweist. Als Zentrier- und Mitnahmemittel für die Diagrammscheibe 7, die eine geeignete Öffnung aufweist, dient ein mit einem exzentrischen Ansatz versehener Dorn 9, der an einem Zahnrad 1o ausgebildet ist. Ein Getriebe 11 verbindet das Zahnrad 1o und somit den Zentrier- und Mitnahmedorn 9 sowie einen Impulsgeber 12 einerseits mit einem Schrittmotor 13, andererseits mit einem Gleichstrommotor 14. Mit 15 und 16 sind die Steuerschaltungen des Schritt- und des Gleichstrommotors 13 bzw. 14 bezeichnet. Mit der Steuerschaltung 16 des Gleichstrommotors 14 steht über eine Leitung L₁ ein mit 17 bezeichneter erster Schalter in Verbindung, welcher beim Transport der Diagrammscheibe 7 in die Zentrierposition betätigt wird. Ein zweiter Schalter 18 ist dem Zentrier- und Mitnahmedorn 9 zugeordnet. Ein UND-Gatter 19 verknüpft über eine Leitung L₂ einerseits den Schalter 18 über eine Leitung L₃ andererseits den Impulsgeber 12 mit dem Eingang eines Impulszählers 2o, der über eine Leitung L₄ von einer der Diagrammscheibe 7 zugeordneten lichtelektrischen Abtasteinrichtung 21 nullstellbar ist. Mit 22 ist ein Zeittaktgeber bezeichnet, dem ein Zeitzähler 23 zugeordnet ist. Ferner ist eine sowohl mit dem Zeitzähler 23 als auch mit dem Impulszähler 2o verknüpfte Vergleichsschaltung 24 vorgesehen, welche über eine Leitung L₅ auf die Steuerschaltung 16 des Gleichstrommotors 14 einwirkt, die über eine Leitung L₆ mit einem Teiler 25 verbunden ist und zweckmäßigerweise erst dann freigegeben wird, wenn die O-Uhr-Markierung 8 erkannt worden ist. Dem Teiler 25 wird vom Zeitgeber 22 über eine Leitung L₇ eine höhere Impulszahl, beispielsweise 5/sek. zugeführt als dem Schrittmotor 13, der, gesteuert durch die Vergleichsschaltung 24, über eine Leitung L₈ beispielsweise mit 1/sek. betätigt wird. Auf diese Weise können, ebenfalls gesteuert durch die Vergleichsschaltung 24, falls erforderlich, ein oder mehrere zusätzliche Korrekturimpulse ausgelöst werden. Die FIG. 2 zeigt ferner, daß dem Zeitzähler 23 eine Dekodierschaltung 26 und eine Anzeigeeinrichtung 27 nachgeschaltet sind. Ferner ist eine Taste 28 vorgesehen, die einem schnellen Hochzählen, d. h. einem Richten des Zeitzählers 23 dient. Wie ferner in FIG. 2 angedeutet ist, können wenigstens die Zähler 2o und 23, die Vergleichsschaltung 24 und der Zeittaktgeber als Hardwareelemente eines Mikroprozessors 29 ausgebildet sein.

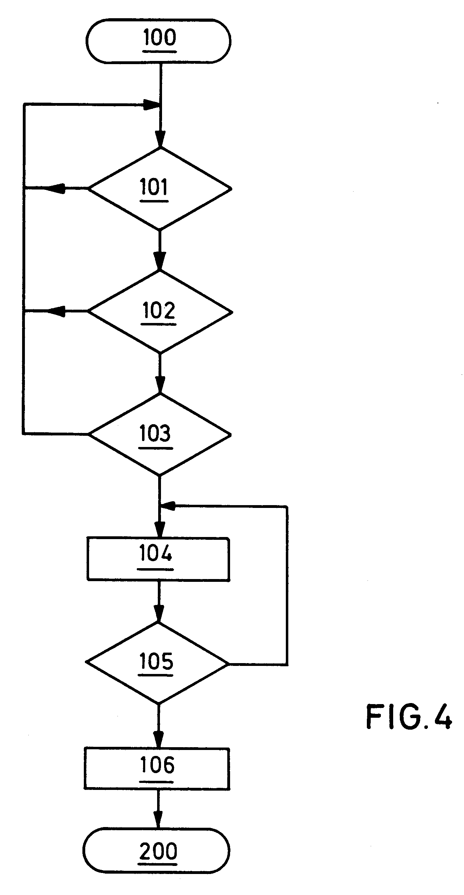

Der Getriebeplan FIG. 3 zeigt, daß bei dem gewählten Ausführungsbeispiel der Schrittmotor 13 über ein auf dessen Motorwelle befestigtes Ritzel 3o und mehrere Zahnradpaare 31/32, 33/34 und 35/36 mit dem einen Sonnenrad 37 eines Differentialgetriebes 38, das gegenüber Freilaufanordnungen weniger Verlustmomente aufweist, in Eingriff steht, während ein dem Gleichstrommotor 14 zugeordnetes Ritzel 39 über ein Zwischenrad 4o mit einem Zahnrad 41 kämmt, das mit dem anderen Zahnrad 42 des Differentialgetriebes 38 ein Zahnradpaar bildet. Die beiden Sonnenräder 37 und 42 stehen ihrerseits über mehrere Planetenräder, von denen eines mit 43 bezeichnet ist, in getrieblicher Verbindung mit dem Stegrad 44 des Differentialgetriebes 38, welches auf einer in geeigneter Weise ortsfest angeordneten Achse 45 gelagert ist und eine Getriebekette 46, 47, 48, 49 und 5o mit dem Zahnrad 1o der Zentrier- und Mitnahmemittel in Eingriff steht. Die Getriebekette 46 bis 5o sowie das Zahnrad 1o und der an diesem ausgebildete Zentrier- und Mitnahmedorn 9 sind auf einem Arm 51 gelagert, welcher mittels einer Lagerbrücke, deren einer Schenkel mit 52 bezeichnet ist, schwenkbar in dem Registriergerät angeordnet ist. Dabei bleiben bei dem relativ geringen Schwenkwinkel des Armes 51 das ortsfeste Stegrad 44 und das auf dem Arm 51 gelagerte Zahnrad 46 stets in Eingriff, wenn, wie FIG. 3 zeigt, der Eingriffspunkt der beiden Räder in den Bereich der Schwenkachse des Armes 51 gelegt wird. Das Heben und Senken des Armes 51, auf den eine Blattfeder 53 einwirkt, wird von einer, weil nicht erfindungswesentlich nicht dargestellten Transportvorrichtung gesteuert, die eine eingegebene und von einer Abtasteinrichtung erkannte Diagrammscheibe selbsttätig in die Zentrierposition führt. In der in FIG. 3 gezeigten, abgesenkten Stellung des Armes 51 ist dieser durch beispielsweise eine Stift-Schlitz-Verbindung, auf deren Darstellung der Einfachheit halber ebenfalls verzichtet worden ist, in seiner Lage exakt fixiert und wirkt, was symbolisch angedeutet ist, auf den Schalter 18 ein. In dieser Stellung wird, was der Vollständigkeit halber erwähnt sei, die Diagrammscheibe, die sich in einem von einer Montageplatte 54 und einer Deckplatte 55 gebildeten Schacht 56 befindet, unter der Wirkung der Blattfeder 53 mittels einer an dem Zentrier- und Mitnahmedorn ausgebildeten Schulter 57 gegen den mitlaufenden Ring eines geeigneten Lagers 58 gedrückt und somit auf dem Zentrier- und Mitnahmedorn 9 festgehalten.

Wird nun eine Diagrammscheibe 7 durch den Schlitz 2 in das Registriergerät eingegeben, so wird, ausgelöst durch eine beispielsweise lichtelektrische Schaltfunktion, die Transportvorrichtung betätigt, welche die innerhalb des Schachtes 56 befindliche Diagrammscheibe 7 in die Zentrierposition führt, wo die Diagrammscheibe 7 von dem durch den Schacht 56 hindurchgreifenden Zentrier- und Mitnahmedorn 9 aufgenommen werden kann. Dabei wird das Absenken des Armes 51, an dem der zusammen mit dem Zahnrad 1o und der Schulter 57 ein Teil darstellende Zentrier- und Mitnahmedorn 9 drehbar gelagert ist, vorzugsweise durch eine geeignete, getriebliche Verbindung mit der Transportvorrichtung gesteuert.

Im Gegensatz zu einem ebenfalls denkbaren, zylindrischen Zentrierdorn, dem zur Mitnahme der Diagrammscheibe 7 geeignete Reibungsflächen oder in die Diagrammscheibe 7 eindringende Spitzen zugeordnet sein müssen, ist es bei dem gewählten, durch den exzentrischen Ansatz eine schlupffreie Mitnahme der Diagrammscheibe 7 gewährleistenden Zentrier- und Mitnahmedorn 9 zweckmäßig, den auch bei angehobenem Arm 51 nicht unterbrochenen vom Schrittmotor 13 gelieferten Zeitantrieb auf eine höhere Drehzahl, sozusagen auf einen Suchlauf, umzuschalten, damit bereits während des Absenkens des Armes 51 der Zentrier-und Mitnahmedorn 9 mit der Zentrieröffnung der Diagrammscheibe 7 in Eingriff gehen kann und somit ein Schleifen des exzentrischen Ansatzes auf der Diagrammscheibe 7 weitgehend vermieden wird.

Ist die Diagrammscheibe 7 ordnungsgemäß auf dem Zentrier- und Mitnahmedorn 9 aufgenommen, so ist auch der Schalter 18 betätigt und über das UND-Gatter 19 der Impulszähler 2o angesteuert. Durch das im Verlauf der Drehung der Diagrammscheibe 7 erscheinende Signal der Abtasteinrichtung 21 wird sowohl der Impulszähler 2o nullgestellt, als auch, da die vor der Nullstellung des Impulszählers 2o in diesen addierten Impulse keine Schaltfunktion ausüben dürfen, die Vergleichsschaltung 24 freigegeben. Bei Gleichheit der Anzahl der im Impulszähler 2o fortlaufend aufaddierten, vom Impulsgeber 12 gelieferten Impulse mit dem Inhalt des Zeitzählers 23, der die Impulse des Zeittaktgebers 22 zählt, und entsprechend dem Zeithorizont der Diagrammscheibe fortlaufend nullgestellt wird, ist der Positioniervorgang beendet, d. h. der Gleichstrommotor 14 wird gestoppt.

Wird das Positionieren der Diagrammscheibe 7 von einem Mikroprozessor 29 gesteuert, so stellt gemäß dem Flußdiagramm FIG. 4 die Positionierroutine 1oo in einem ersten Programmschritt 1o1 fest, ob eine Diagrammscheibe vorhanden ist, der Zentrier und Mitnahmedorn 9 abgesenkt ist und der Gleichstrommotor 14 läuft. Ein weiterer Programmschritt 1o2 dient der Feststellung, ob ein vom Impulsgeber 12 oder 59 gelieferter Impuls ansteht. In einem dritten Programmschritt 1o3 wird das Auftreten des O-Uhr-Markierungssignals überwacht. In einer nachfolgenden Programmschleife 1o4, 1o5 wird bei Erfüllung der vorstehenden Bedingungen ein anstehender Impuls in den Impulszähler 2o übernommen und danach die Inhalte von Zeitzähler 23 und Impulszähler 2o miteinander verglichen. Diese Programmschleife wird solange wiederholt, bis Gleichheit der beiden Zählerinhalte erkannt wird. Danach wird mit dem Programmschritt 1o6 der die Positionierdrehzahl liefernde Gleichstrommotor 14 abgeschaltet und die Programmroutine (2oo) unterbrochen.

Nachfolgend wird die Diagrammscheibe 7 vom Schrittmotor 13 zeittaktabhängig angetrieben, wobei die in FIG. 2 dargestellte Schaltung als Regelkreis arbeitet und erst bei Ungleichheit der Inhalte der Zähler 2o und 23 den Schrittmotor nachführt. In diesem Falle ist es erforderlich, daß der Impulsgeber 12 dem Ausgang des Differentialgetriebes 38 zugeordnet ist. Alternativ kann ein lediglich dem Positioniervorgang dienender Impulsgeber 59, wie in FIG. 3 schematisch dargestellt, ausschließlich dem Gleichstrommotor 14 zugeordnet sein. In diesem Falle wird der Schrittmotor 13, ohne daß eine Rückmeldung über den jeweils ausgeführten Schritt erfolgt, unmittelbar vom Zeittaktgeber 22 angesteuert.

Es sei noch erwähnt, daß, je nachdem, ob die Abstasteinrichtung 21 in Drehrichtung der Diagrammscheibe vor oder nach der Registrierlinie, auf der die Registrierorgane wirksam sind, angeordnet ist, eine konstante Impulszahl vorgegeben oder unterdrückt werden muß, um eine zeitrichtige Positionierung der Diagrammscheibe 7 bezüglich der Registrierlinie zu erzielen. Ferner kann bei einer Lösung mit einem exzentrischen Zentrier-und Mitnahmedorn 9, bei der eine feste Zuordnung von Zeitskale und Dorn besteht, die O-Uhr-Markierung an einer koaxial zur Diagrammscheibe 7 mitlaufenden Scheibe angebracht sein, wobei dann Zeitfehler, die durch Spiel zwischen der Aufnahmeöffnung der Diagrammscheibe 7 und dem Zenrrier- und Mitnahmedorn 9, insbesondere bei Beschädigung der Aufnahmeöffnung, in Kauf genommen werden müssen.

## Patentansprüche

1. Anordnung zum selbsttätigen, zeitrichtigen Positionieren einer Diagrammscheibe (7) relativ zu den auf die Diagrammscheibe (7) einwirkenden Registrierorganen in einem Registriergerät, in welchem die durch einen Schlitz (2) eingegebene und mit einer Zentrieröffnung versehene Diagrammscheibe von Zentrier- und Mitnamemitteln (9, 10, 57) aufgenommen und von einem Laufwerk zeitsynchron angetrieben wird,
gekennzeichnet durch
eine Schalterinrichtung, welche spätestens dann, wenn die Diagrammscheibe (7) von den Relativ zur Diagrammscheibe (7) bewegbaren Zentrier- und Mitnahmemitteln (9, 1o, 57) aufgenommen ist, den Antrieb der Diagrammscheibe (7) von einer Registrierdrehzahl auf eine höhere Positionierdrehzahl umschaltet,
eine Abtasteinrichtung (21), welche ein von einer der Diagrammscheibe (7) zugeordneten Markierung (8) erzeugtes Signal liefert, und
eine Steuereinrichtung, welche, ausgelöst durch das Signal der Abtasteinrichtung (21), die höhere Drehzahl auf die Registrierdrehzahl dann umschaltet, wenn der von der Markierung (8) auf der Diagrammscheibe (7) ausgehend von der Position der Abtastvorrichtung (21) zurückgelegte Winkelweg einer Registrierzeit entspricht, welche mit dem aktuellen Inhalt eines den zeitlichen Registrierumfang der Diagrammscheibe (7) begrenzenden Zeitzählers (23) übereinstimmt.

2. Anordnung nach Anspruch 1,
gekennzeichnet dadurch,
daß die Steuereinrichtung einen Impulsgeber (12), welcher mit dem Antrieb der Diagrammscheibe (7) in getrieblicher Verbindung steht und Impulse entsprechend dem zeitlichen Registrierumfang der Diagrammscheibe (7) liefert, einen Impulszähler (2o), welcher durch das von der Abtasteinrichtung (21) gelieferte Signal nullstellbar ist und fortlaufend die vom Impulsgeber (12) gelieferten Impulse addiert und eine Vergleichsschaltung (24) umfaßt, welche dann ein Signal zum Umschalten des Antriebes der Diagrammscheibe (7) auf die Registrierdrehzahl liefert, wenn die Differenz der Inhalte von Zeitzähler (23) und Impulszähler (2o) Null ist.

3. Anordnung nach Anspruch 1,
dadurch gekennzeichnet,
daß ein erster Schalter (17) vorgesehen ist, der beim Transport der Diagrammscheibe (7) in die Zentrierposition betätigt wird und das Umschalten des Diagrammscheibenantriebes auf die höhere Positionierdrehzahl bewirkt, daß ein zweiter Schalter (18) vorgesehen ist, welcher bei der Aufnahme der Diagrammscheibe (7) durch die Zentrierund Mitnahmemittel (9, 1o, 57) betätigt wird und die Freigabe der Impulszählung bewirkt und
daß die Abtasteinrichtung (21) sowohl das Nullstellen des Impulszählers (2o) als auch die Vergleichsschaltung (24) steuert.

4. Anordnung nach Anspruch 1,
dadurch gekennzeichnet,
daß für den Registrierantrieb der Diagrammscheibe ein von einem Zeittaktgeber (22) gesteuerter Schrittmotor (13) vorgesehen ist,
daß dem Positionierantrieb der Diagrammscheibe (7) ein Gleichstrommotor (14) dient und
daß die Zentrier- und Mitnahmemittel (9, 1o, 57) über ein Summiergetriebe getrieblich sowohl mit dem Schritt- als auch mit dem Gleichstrommotor (13 und 14) in Wirkverbindung stehen.

5. Anordnung nach Anspruch 4,
dadurch gekennzeichnet,
daß als Summiergetriebe ein Differentialgetriebe (38) vorgesehen ist.

6. Anordnung nach Anspruch 4,
dadurch gekennzeichnet,
daß der Schrittmotor (13) und der Gleichstrommotor (14) über jeweils eine Freilaufeinrichtung auf die Zentrier-und Mitnahmemittel (9, 1o, 57) einwirken.

7. Anordnung nach Anspruch 1,
dadurch gekennzeichnet,
daß sowohl für den Registrierantrieb als auch für den Positionierantrieb der Diagrammscheibe (7) ein und derselbe Gleichstrommotor vorgesehen ist.

8. Anordnung nach Anspruch 1,
dadurch gekennzeichnet,
daß die mit dem Laufwerk in stetiger getrieblicher Verbindung stehenden Zentrier- und Mitnahmemittel (9, 1o, 57) an einem senkrecht zur Diagrammscheibe (7) verschwenkbaren Arm (51) gelagert sind und
daß dem Arm (51) der den Impulszähler (2o) steuernde zweite Schalter (18) zugeordnet ist.

9. Anordnung nach Anspruch 1,
dadurch gekennzeichnet,
daß für den Positionierantrieb ein Schrittmotor vorgesehen ist und
daß nach dem Erscheinen des von der Abtasteinrichtung (21) gelieferten Signals die Schrittzahl des Schrittmotors durch den Inhalt des Zeitzählers (23) bestimmt ist.

## Claims

1. Arrangement for the automatic, time-correct positioning of a graph chart (7) relative to the recording elements acting on the graph chart (7) in a recording device in which the graph chart, which is inserted through a slot (2) and which is provided with a centring opening, is received by centring and entraining means (9, 10, 57) and is driven in time-synchronous manner by a drive mechanism, characterized by: a switching means which switches the drive of the graph chart (7) from a recording speed over to a higher positioning speed at the latest when the graph chart (7) is received by the centring and entraining means (9, 10, 57) which are movable relative to the graph chart (7); a scanning device (21) which supplies a signal generated by a mark (8) associated with the graph chart (7); and a control device which, triggered by the signal of the scanning device (21), switches the higher speed over to the recording speed when the angular distance covered by the mark (8) on the graph chart (7), starting from the position of the scanning apparatus (21), corresponds to a recording time which matches the current contents of a time counter (23) limiting the recording time capacity of the graph chart (7).

2. Arrangement according to Claim 1, characterized in that the control device comprises: a pulse transmitter (12) which is in geared connection with the drive of the graph chart (7) and supplies pulses corresponding to the recording time capacity of the graph chart (7); a pulse counter (20) which can be set to zero by the signal supplied from the scanning device (21) and continuously adds the pulses supplied from the pulse transmitter (12); and a comparator circuit (24) which supplies a signal for switching the drive of the graph chart (7) over to the recording speed when the difference in the contents of time counter (23) and pulse counter (20) is zero.

3. Arrangement according to Claim 1, characterized in that there is provided a first switch (17) which is activated during transporting of the graph chart (7) into the centring position and brings about switching of the graph chart drive over to the higher positioning speed, in that there is provided a second switch (18) which is activated during receiving of the graph chart (7) by the centring and entraining means (9, 10, 57) and brings about the release of pulse counting, and in that the scanning device (21) controls both the setting of the pulse counter (20) to zero and the comparator circuit (24).

4. Arrangement according to Claim 1, characterized in that a stepping motor (13) which is controlled by a time clocking unit (22) is provided for the recording drive of the graph chart, in that a d.c. motor (4) serves for the positioning drive of the graph chart (7), and in that the centring and entraining means (9, 10, 57) are in active geared connection both with the stepping and with the d.c. motor (13 and 14) by way of a summator gear train.

5. Arrangement according to Claim 4, characterized in that a differential gear (38) is provided as the summator gear train.

6. Arrangement according to Claim 4, characterized in that the stepping motor (13) and the d.c. motor (14) act on the centring and entraining means (9, 10, 57) by way of a respective free-running arrangement.

7. Arrangement according to Claim 1, characterized in that one and the same d.c. motor is provided both for the recording drive and for the positioning drive of the graph chart (7).

8. Arrangement according to Claim 1, characterized in that the centring and entraining means (9, 10, 57) which are in constant geared connection with the drive mechanism are mounted on an arm (51) which may be pivoted perpendicularly with respect to the graph chart (7), and in that the second switch (18) which controls the pulse counter (20) is associated with the arm (51).

9. Arrangement according to Claim 1, characterized in that a stepping motor is provided for the positioning drive, and in that the step count of the stepping motor is determined by the contents of the time counter (23) after the appearance of the signal supplied from the scanning device (21).

## Revendications

1. Dispositif pour le positionnement automatique en fonction du temps réel d'un disque de diagramme (7) relativement aux organes d'enregistrement agissant sur ledit disque de diagramme (7) dans un appareil enregistreur, dans lequel le disque de diagramme introduit par une fente (2) et pourvu d'une ouverture de centrage est pris en charge par des moyens de centrage et d'entraînement (9, 10, 57) et entraîné par un mécanisme d'entraînement en synchronisme avec l'heure,
caractérisé par
un dispositif de commutation qui commute, au plus tard lorsque le disque de diagramme (7) est pris en charge par les moyens de centrage et d'entraînement (9, 10, 57) déplaçables par rapport au disque de diagramme (7), l'entraînement du disque de diagramme (7) d'une vitesse de rotation d'enregistrement sur une vitesse de rotation de positionnement plus élevée, un dispositif d'exploration (21) qui fournit un signal engendré par un marquage (8) associé au disque de diagramme (7), et un dispositif de commande qui, déclenché par le signal du dispositif d'exploration (21), commute de la vitesse de rotation plus élevée sur la vitesse de rotation d'enregistrement lorsque le trajet angulaire parcouru par le marquage (8) sur le disque de diagramme (7) en partant de la position du dispositif d'exploration (21) correspond à un temps d'enregistrement qui coïncide avec le contenu actuel d'un compteur horaire (23) limitant le volume d'enregistrement temporel du disque de diagramme (7).

2. Dispositif selon la revendication 1,
caractérisé par le fait
que le dispositif de commande comprend un générateur d'impulsions (12) qui coopère fonctionnellement avec l'entraînement du disque de diagramme (7) et fournit des impulsions conformément au volume d'enregistrement temporel du disque de diagramme (7), un compter d'impulsions (20) qui peut être remis à zéro par le signal fourni par le dispositif d'exploration (21) et qui additionne en continu les impulsions fournies par le générateur d'impulsions (12), et un circuit comparateur (24) qui fournit un signal pour l'inversion de l'entraînement du disque de diagramme (7) sur la vitesse de rotation d'enregistrement lorsque la différence des contenus du compteur horaire (23) et du compteur d'impulsions (20) est égale à zéro.

3. Dispositif selon la revendication 1,
caractérisé par le fait
qu'il est prévu un premier interrupteur (17) qui est actionné lors du transport du disque de diagramme (7) dans la position de centrage et qui opère la commutation de l'entraînement du disque de diagramme sur la vitesse de rotation de positionnement plus élevée,
qu'il est prévu un deuxième interrupteur (18) qui est actionné lors de la prise en charge du disque de diagramme (7) par les moyens de centrage et d'entraînement (9, 10, 57) et qui opère le déblocage du comptage des impulsions et
que le dispositif d'exploration (21) commande aussi bien la remise à zéro du compteur d'impulsions (20) que le circuit comparateur (24).

4. Dispositif selon la revendication 1,
caractérisé par le fait
que, pour l'entraînement d'enregistrement du disque de diagramme (7), il est prévu un moteur pas à pas (13) commandé par un générateur d'horloge (22),
qu'un moteur à courant continu (14) sert à l'entraînement de positionnement du disque de diagramme (7) et
que les moyens de centrage et d'entraînement (9, 10, 57) coopèrent fonctionnellement, par l'intermédiaire de roues apportées, aussi bien avec le moteur pas à pas (13) qu'avec le moteur à courant continu (14).

5. Dispositif selon la revendication 4,
caractérisé par le fait
que, comme engrenage totalisateur, il est prévu un engrenage différentiel (38).

6. Dispositif selon la revendication 4,
caractérisé par le fait
que le moteur pas à pas (13) et le moteur à courant continu (14) agissent, par l'intermédiaire de respectivement un dispositif à roue libre, sur les moyens de centrage et d'entraînement (9, 10, 57).

7. Dispositif selon la revendication 1,
caractérisé par le fait
que le même moteur à courant continu (14) est prévu aussi bien pour l'entraînement d'enregistrement que pour l'entraînement de positionnement du disque de diagramme (7).

8. Dispositif selon la revendication 1,
caractérisé par le fait
que les moyens de centrage et d'entraînement (9, 10, 57) étant en coopèration fonctionnelle constante avec le mécanisme d entraînement sont montés sur un bras (51) pouvant pivoter perpendiculairement par rapport au disque de diagramme (7) et qu'au bras (51) est associé le deuxième interrupteur (18) commandant le compteur d'impulsions (20).

9. Dispositif selon la revendication 1,
caractérisé par le fait
que, pour l'entraînement de positionnement, il est prévu un moteur pas à pas et
que, après l'apparition du signal fourni par le dispositif d'exploration (21), le nombre de pas du moteur pas à pas est déterminé par le contenu du compteur horaire (23).
